# EUROPEAN PATENT SPECIFICATION

(11) **EP 3 655 347 B1**
(45) Date of publication and mention of the grant of the patent: **21.04.2021**
(21) Application number: 18766356.2
(22) Date of filing: 16.07.2018
(51) Int. Cl.: B65D 85/804

(54) **A PAD CONTAINING ROASTED AND GROUND COFFEE FOR PREPARING AT LEAST A COFFEE PART OF A BEVERAGE IN A BEVERAGE PREPARING DEVICE, METHOD AND SYSTEM FOR PREPARING A BEVERAGE**
PAD MIT GERÖSTETEM UND GEMAHLENEM KAFFEE ZUR ZUBEREITUNG VON MINDESTENS EINEM KAFFEETEIL EINES GETRÄNKS IN EINER GETRÄNKEZUBEREITUNGSVORRICHTUNG, VERFAHREN UND SYSTEM ZUR ZUBEREITUNG EINES GETRÄNKS
DOSETTE CONTENANT DU CAFÉ TORRÉFIÉ ET MOULU POUR PRÉPARER AU MOINS UNE PARTIE DU CAFÉ D'UNE BOISSON DANS UN DISPOSITIF DE PRÉPARATION DE BOISSON, PROCÉDÉ ET SYSTÈME POUR PRÉPARER UNE BOISSON

(30) Priority: 17.07.2017 NL 2019260
(43) Date of publication of application: 27.05.2020
(73) Proprietor: Koninklijke Douwe Egberts B.V., 3532 AD Utrecht (NL)
(72) Inventor: BIESHEUVEL, Arend Cornelis Jacobus, 3532 AD Utrecht (NL)
(74) Representative: V.O.
(86) International application number: PCT/NL2018/050488
(87) International publication number: WO 2019/017774

(56) References cited:
- WO-A1-2007/122144
- WO-A1-2013/080073
- WO-A2-2014/126464
- US-A1- 2004 115 310
- US-A1- 2013 071 522
- US-A1- 2015 298 898

## Description

The invention relates to a flexible pouch-like coffee pad having an improved homogeneous flow resistance, and to a method of preparing a beverage using such a pad.

In known coffee pads, such as those of the Senseo® type, the desired flow resistance is mainly obtained by the coffee bed within the outer pad covering. As it is difficult to create a homogeneous coffee bed, there always exists a risk with the known coffee pads that non-homogeneities in coffee grind, its distribution, or agglomerations within the pad can cause undesirable flow-paths or bypass areas through the coffee bed. The resulting localized higher than optimal flow rates of the brewing water rinses or extracts coffee oils from the roasted and ground coffee particles.

In the known pads of the described type a bed of ground coffee is retained in an outer pad covering of filter material, which is permeable to heated brewing water, but substantially impermeable to the ground coffee particles of the coffee bed. An upper surface of the outer pad covering thereby forms an entrance filter, and a lower surface of the covering thereby forms an exit filter for the brew. Such pads are also disclosed in WO2007122144 A1, US2004115310 A1 and WO2013/080073 A1. It has been traditional practice to select the coffee grind size in accordance with the desired flow resistance of the coffee bed, and to select at least the exit filter pore size in accordance with the selected grind size. A finer grind size will result in a higher flow resistance, but at the same time increase the risk of coffee particles forming agglomerates, which increases the chances of internal bypass occurring in the coffee bed. Another problem associated with a finer grind size is that the amount of coffee oils in the beverage can increase to unacceptable levels.

Currently, in flexible pads, the extraction is not optimal throughout the pad, however the internal bypass has not yet been quantified in current pads. Internal bypass is a process in which water takes the path of least resistance through a coffee bed in which the coffee bed is non-homogeneous. Such bypass prevents the extraction of part of the coffee, additionally fluid regimes are often formed due to such bypass in which in paths of least resistance the flow velocity of water is sufficiently high to extract oil from coffee grinds. This is further detrimental to the product. Resistance against a flow is measured in pressure drop. In particular when high dry matter beverages, having a small brewing volume, are desired non-homogeneities in the coffee bed will have a strong impact on the final product in terms of internal bypass (poor extraction of parts of the coffee bed) and oil presence in the product. The finer the grind of the coffee, the more likely the chance for bypass to occur. The invention enables to use finer ground coffee with likely lesser bypass.

In a time limited extraction method, in particular the known Senseo, high dry matter beverages can be acquired by providing additional flow resistance in the coffee bed. Accordingly, grind size is often reduced and/or higher doses of coffee powder are used to achieve the additional flow resistance. However, this increases the effects of non-homogeneities, and smaller grind size additionally increases oil extraction. Coffee powder may further clump together or compact during extraction under the added water pressure forming localized restrictions in the coffee bed. This results in partial clogging of the coffee bed. When creating high dry matter beverages in a Senseo type extraction method, quality and oil levels are difficult to guarantee. Accordingly with Senseo brewing dry matter content cannot be increased with the aid of finer grinding (~200micron ~x50). The coffee bed becomes clogged and oil content is increases to an unacceptable level.

Accordingly it is an object of the present invention to propose an improved pad, method of use and a system to obtain a lungo type of espresso. In a more general sense it is thus an object of the invention to overcome or reduce at least one of the disadvantages of the prior art. It is also an object of the present invention to provide alternative solutions which are less cumbersome in manufacture, operation or environmental impact, and which moreover can be made relatively inexpensively. Alternatively it is an object of the invention to at least provide a useful alternative.

To achieve the stated objectives the invention proposes a pad, a method of preparing a beverage using this pad and a system using this pad as defined in one or more of the appended claims. Accordingly the present invention proposes a pad for use in a beverage preparing device comprising. an at least partly porous first sheet of flexible material. The pad further comprises an at least partly porous second sheet of flexible material. The pad also comprises a bed of coffee particles provided between the first and second sheet. The first sheet forms an inlet sheet at a water receiving side of the pad. The second sheet forms an exit filter at an outlet side of the pad. The bed of coffee particles has a first fluid flow resistance. The exit filter has a second fluid flow resistance that exceeds the first fluid flow resistance. The exit filter is selected to possess a Herzberg water permeability of 300 - 3500 seconds per 100 ml per 10 cm² at a pressure head of 50 mm Hg for generating a third fluid flow resistance, in the presence of coffee particles, which exceeds the first fluid flow resistance. A benefit is that the fluid flow resistance at the downstream exit of a pad can thereby be increased without substantially varying the actual fluid flow resistance of an exit sheet or filter itself, while interactions causing the additional flow resistance are only generated when necessary, namely during use. It will be appreciated that sedimentary interactions may occur alongside non-sedimentary interactions. However, at the mentioned level of water permeability coffee particles largely temporarily adhere to pore openings in the exit filter or occupy proximate areas to the pore openings. Often such coffee particles are displaced by other coffee particles or the fluid flow itself. It is thus believed that a dynamic and non-sedimentary interaction is responsible for the third fluid flow resistance at or around the interface of the coffee bed and exit filter. It will be appreciated that the dimension of Herzberg water permeability is here seconds per 100 ml of distilled water at 20°C per 10 cm² filter or sheet surface at a (static) pressure head of 50mm Hg.

The inlet sheet and the exit filter are connected to one another to form connected sheets defining an interior space in which the bed of coffee particles is enclosed.

The pad comprises an at least partly porous third sheet of flexible material, wherein the inlet sheet and the third sheet are connected to one another to form connected sheets defining an interior space in which the bed of coffee particles and the exit are enclosed.

The connected sheets each comprise a perimeter edge, and wherein the perimeter edges are sealed to one another. It will be appreciated that connected sheets can be either the inlet sheet and the exit filter, or the inlet sheet and the third sheet.

Optionally, the connected sheets have mutually different diameters. This would allow a pad to be asymmetrical shaped such that the consumer can determine which way to place a pad in a machine based in its shape.

Optionally, the exit filter has a Herzberg water permeability of 375 - 2800 seconds per 100 ml per 10cm². Over this range a beneficial exponential relation exists between the water permeability and an overall pressure drop over the pad. This allows for the selection of the particular dimension of the third fluid flow resistance by means of the water permeability. Under Senseo type brewing conditions, such as brewing under a predefined water pressure, or water pressure gradient, over a predefined time, this allows a final brewing volume to be selected by means of water permeability of the filter. Optionally, the sheet that is arranged to be downstream of the bed of coffee particles is selected with a Herzberg water permeability of 800-2750 seconds per 100 ml per 10 cm². Advantageously in this particular range the third fluid flow resistance is substantially increased, with respect to a lower permeability, while additionally preventing a clogging or other stagnation of flow through a pad with coffee powder and/or other brewing materials when supplying water to the pad under a static pressure of 2.0-2.5 bar.

Optionally, the exit filter has an average pore size of 0.1 - 10 µm. Exit filter pore sizes are based on particle retention. A pore size of 1 µm means that at least 50% of particles of 1 µm in size or bigger are retained by the filter. The size of the particle can be a relative diameter of the particle. The average pore size can thus be determined by throughput of particles. Alternatively, pore size can also be determined by means of electron microscopy, such as by analyzing the surface pores to obtain an average size. The pores in this specific size range have a more limited size range of particles from which they are able to draw in particles compared to larger pores. In ground coffee only a very small fraction of coffee is even in the range of 10 µm or lower, often less then a single percent. Thus a local build up of particles around or in the pores is generally low. Even in very fine ground coffee the particles are on average ten or tens of times larger than these pore sizes.

Optionally, the exit filter has an average pore size of 0.1 - 6 µm, preferably 0.5 - 2.0 µm. In a time limited extraction with predefined pressures at which water is supplied to the pad, a lower brew volume can be obtained while elevating the dry matter content of the beverage even further.

Optionally, the at least partly porous first sheet of flexible material includes a first filter. Alternatively or additionally the at least partly porous second sheet of flexible material can include a second filter. When the first and second filters have different properties it can be convenient when the at least partly porous first sheet is marked or predefined for identification for use as the water receiving side of the pad.

Optionally, the second fluid flow resistance in combination with the third fluid flow resistance amounts to at least a duplication of the second fluid flow resistance. This can be accomplished by choosing the Herzberg water permeability such that the third fluid flow resistance is at least equal to or greater than the second fluid flow resistance. A benefit is that a total resistance at an exit of a pad is guaranteed a minimum resistance provided by the second resistance and a variable third resistance which will adapt itself to local flow conditions of fluid as needed without a need of any form of funneling of all brewed liquid to common nozzle(s) or exit(s). It will be appreciated that the duplication here means at least a moment of duplication during the brewing process, such as provided under flow conditions and water pressures as provided by a Senseo® type coffee brewing device.

With the Senseo® type coffee brewing devices the supply of water to the pad is time controlled. This particular property could offer the additional benefit that using the pad according to the invention a beverage extract can be delivered with a limited liquid brew volume, but having a higher mass content of extracted ingredients. Such a high dry matter beverage extract would be comparable to a lungo type of espresso.

The prevention of coffee oil extraction can be further enhanced by using a finer grind size for the coffee bed, when it is combined with an exit filter in accordance with the invention that has a higher flow resistance than that averaged by the coffee bed. The best results have been obtained with a roller grind having an average particle sizes around and below 200 µm. It is here considered that such a grind will yield a substantial amount of particles that are sized below 100 µm in its particle distribution, such as at least 25% of the mass of the grind.

Optionally, the bed of roasted and ground coffee particles has a grind size with an average value of 150 - 600 µm. This grind can have a double or a triple lognormal distribution of particle sizes. This relatively fine size of coffee grinds increases the risk of coffee oils being extracted. Coffee oils are olefins and paraffins (C4-C7 hydrocarbons), which are present in coffee beans, and when extracted impair the taste of the coffee brew. However, the features of the present invention permit these finer coffee grinds.

Optionally, the bed of roasted and ground coffee particles is provided having a particle size distribution in which at least 5%; 6%; 7%; 8%; 9%; or 10%, less than 40%; 35% or 30% and/or between 5 - 40%; 5 - 30%; 10 - 30% or, preferably, between 10 - 40% of the mass of the roasted and ground coffee is 1 - 100 µm and smaller, in particular smaller up to, but not including 0 µm. This allows for a simultaneous increase in the first fluid flow resistance and third fluid flow resistance during extraction. Particles smaller than 100 µm are able to migrate in the coffee bed during extraction and provide a stronger third fluid flow restriction with the pores of the exit sheet, in particular when used in combination with an exit filter selected to have a Herzberg water permeability of 300 - 3500 seconds per 100 ml per 10 cm2 at a pressure head of 50 mm Hg. A benefit is that the coffee bed will also rapidly self-correct any bypasses that are formed in the coffee bed during extraction as the mentioned particles migrate faster toward the exit sheet in areas of bypass. Interaction at the filter will then provide additional localized resistance thus providing a resistance feedback interaction to any bypass. The mentioned particle size distribution can be obtained by means of grinding coffee beans using a roller mill. The particle size distribution type may characterize itself by a double lognormal distribution or a triple lognormal distribution. The roller mill can be set to any grind size in which lower intervals of the mentioned lognormal distributions add up to the mentioned percentage of particles within the mentioned range.

Optionally, the second and third fluid flow resistance combined corresponds to a pressure drop between 0.2 and 1.5 bar. Preferably the pressure drop can be between 0.4 and 0.9 bar.

In one or the other embodiment as outlined above at least one of the first sheet and the second sheet can be made of a non-woven filter material. This non-woven filter material can be filtering paper, and/or at least one of the first sheet and the second sheet can be made up for at least 70% of cellulose, preferably for at least 80% of cellulose, more preferably for at least 90% of cellulose. Also the non-woven filter material can be one of cellulose and cotton linters, and can contains ash.

Optionally, the first or second sheet has a density of 400-1000 kg per m³, preferably 500-900kg per m³, and more preferably 525-870 kg per m³. A benefit is that a nominal particle retention in the filter can be reduced as a higher density corresponds to fewer internal voids in which smaller microscopic particles may be retained after a pore incursion. Optionally, the first or second sheet has a density of 830-850 kg per m³. With benefit the increased density will allow the filter to be compact with few internal voids. Such a filter is less likely to be compressible under changing fluid pressures. Thereby the filter performance is allowed to remain more or less constant under changing brewing conditions. Changes in brewing conditions may occur at the beginning and end of brewing where pressure rises and drops. Also in Senseo machines brewing may occur at several, mutually different predefined pressures over time which can be seen as a single predefined pressure gradient over time.

The invention also relates to a method of preparing a beverage comprising the steps of: providing a pad in accordance with one of claims 1 to 17; providing a beverage preparing device having a time controlled supply of pressurized hot water and a holder for holding the pad; inserting the pad into the holder of the beverage preparing device; activating the supply of pressurized hot water; allowing brewed coffee to be expelled from the pad; and collecting the brewed coffee for consumption.

The invention also relates to a system for preparing a beverage comprising the pad according to the invention and beverage preparing device. The beverage preparing device is arranged for a time controlled supply of pressurized hot water, in particular to the pad, and comprises a holder for holding the pad.

The pad according to the invention thus is suitable for preparing at least one part of a single beverage serving in a coffee machine. In use, when positioned in the coffee machine, an aqueous fluid such as water is supplied under pressure to an entrance side of the pad allowing the fluid to be forced through a coffee bed within the pad for obtaining a coffee beverage extract that will be expelled from an exit side of the pad. The pad has a covering comprising a first and second flexible first sheet defining the entrance and exit sides, and an interior space accommodating the bed of extractable roast and ground coffee particles.

Further advantageous aspects of the invention will become clear from the appended description and in reference to particular examples, such as provided in the following figures.
Fig. 1 shows a table with test results and shows higher dry matter (DMA), a lower brew volume, for an increased restriction downstream of a coffee bed;
Fig. 2 shows a table with test results in which the concentration of extracted oil is shown with respect to pressure drop over a predefined coffee bed using a conventional coffee pad in a conventional Senseo machine;
Fig. 3 shows a diagram of test results which show a correlation between pressure drop at the exit of the pad and concentration of extracted oil for a pad according to the invention in a conventional Senseo machine;
Fig. 4 shows a table with comparative properties and results of various filter materials that have been tested; and
Fig. 5 shows a bar diagram that compares the results of the tested filter materials as listed in the table of Figure 4.

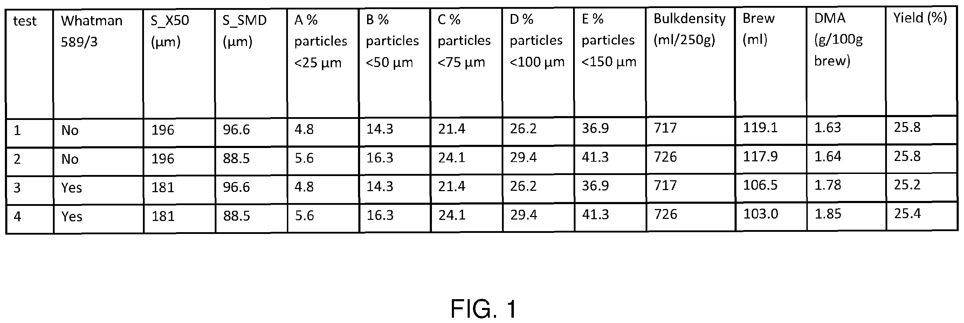

Figure 1 is a table with test results and shows higher dry matter (DMA), a lower brew volume, for an increased restriction downstream of a coffee bed. This effect is increased when a higher percentage of particles is below 100 µm. The best results were obtained with a pad provided with a Whatman 589/3 filter paper of the "blauwband" variety. In the test setup conventional Senseo coffee pads were used having a diameter of 7 cm. The pads each comprised a coffee bed of 7.5 g of ground coffee powder. The Whatman 589/3 filter paper was, in tests 3 and 4, provided as an insert within conventional Senseo coffee pads. The test was executed using a conventional Senseo machine. Tests 1 and 2 are reference tests using conventional Senseo coffee pads without the Whatman 589/3 filter paper insert. The particulars of the coffee grind making up the coffee bed in each test are also shown in Figure 1. The mean particle size (S_X50), the standard deviation (S_SMD) and particle size fractions A, B, C, D, E of the coffee grind are given. These fractions indicate a percentage of a mass of the coffee bed that is of a particle size below a predefined indicated size. It can be derived from the particle sizes in Figure 1 that the size distribution shows a peak of coffee grinds in particle sizes between 25 en 50 µm. This is indicative of a double-lognormal particle size distribution. Mentioned coffee particle sizes are obtained using laser diffraction. The methods used are in line with the international standardized laser-diffraction and particle size analysis as specified in ISO 13320. Measurements and analysis results were obtained by means of the HELOS® laser diffraction sensor from Sympatec®.

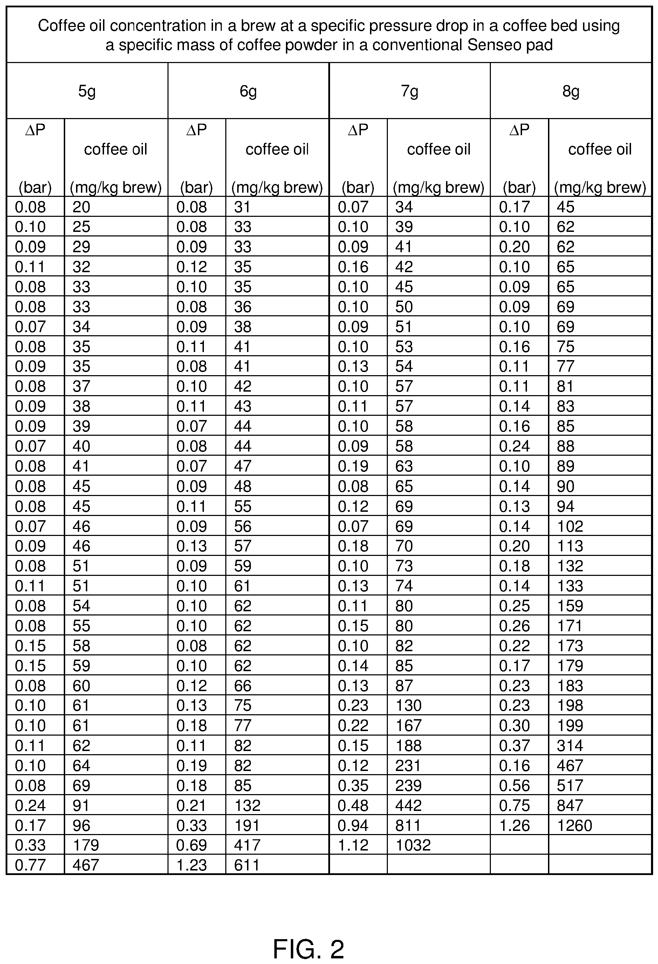

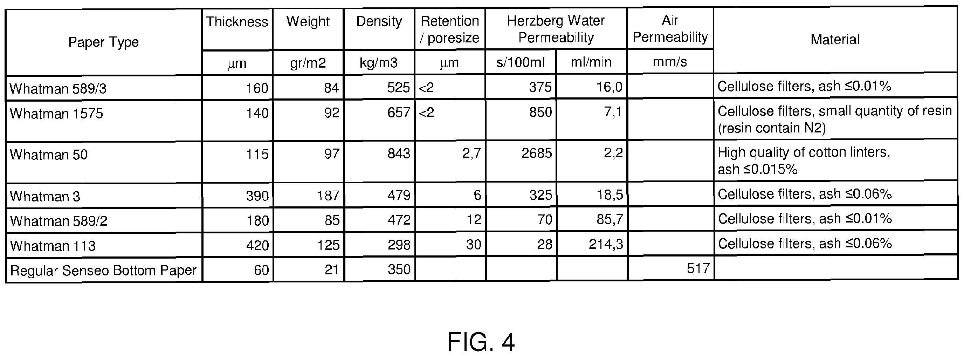

Figure 2 is a table showing the correlation between pressure drop in bar and extracted oil in mg per kg of brew for a conventional coffee pad in a conventional Senseo machine. An increase in pressure drop is here achieved by altering grind size of the coffee in the conventional coffee pad. The conventional Senseo coffee pad is a paper envelope with a diameter of approximately 7cm for containing coffee powder. The envelope comprises a non-woven regular Senseo bottom paper as shown defined in Figure 4. Pressure drop is here inversely proportional to the grind size. As such, it can be derived from the Figure 2 that reducing the grind size will yield an increase in oil concentration in the brew. An oil concentration of 200 mg per kg brew or higher is preferably avoided. In practice this means that conventional coffee pads for the Senseo machine cannot be provided with a coffee grind with a grind size which yields a pressure drop above 0.3 bar during extraction using the Senseo machine.

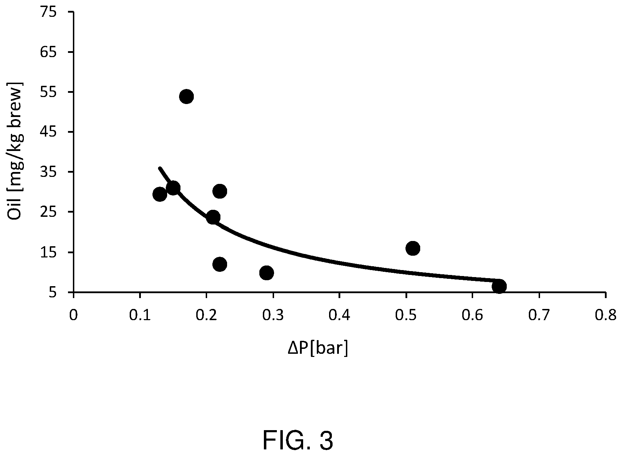

Figure 3 is a diagram showing the correlation between pressure drop in bar and extracted oil in mg per kg of brew for the pad according to the invention in a conventional Senseo machine. The pressure drop in this Figure is different from that in Figure 2. The pressure drop is here related to a chosen filter at the exit of the pad with a fluid flow resistance. Therewith, it was found that there exists a relation between a fluid flow resistance at the exit of the pad and oil concentration in the brew.

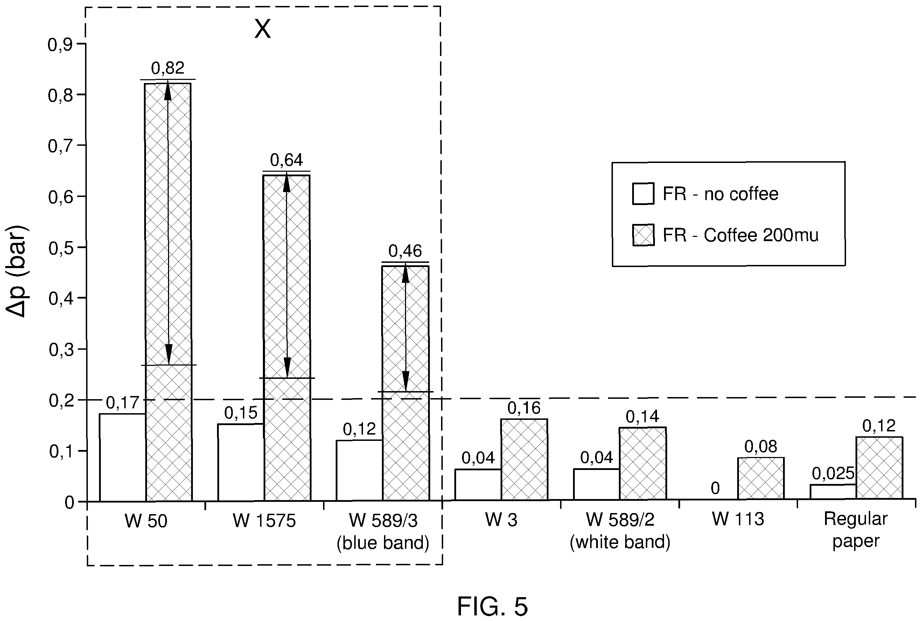

Figure 4 is a table showing comparative properties and results of various filter materials that have been tested. The filters of interest, indicated in Figure 4, include Whatman 589/3, Whatman 1575 and Whatman 50 paper. The best results as also shown in Figure 5 were obtained with Whatman 50 paper. An additional benefit of this paper is that cracks are prevented from forming while pressing the filter into a curved shape. In the current Senseo pad holder the upstream filter of the pad lays flat and is straight, while the downstream filter is supported on a bowl shaped cavity and thereby is curved such that the curvature of the second filter defines the inner volume of the pad. The curvature is such that the pad is allowed to contain between 3-10 grams, preferably between 3-8 grams of coffee, while the pad has a transverse diameter of approximately 6 cm. Whatman 50 comprises cotton linters and ash 0.015% and is technically not paper since it does not contain cellulose.

Figure 5 is bar diagram comparing the results of the tested filter materials as listed in the table of Figure 4. As illustrated by Figure 5 for the high pressure drop "X" filters, the exit fluid flow resistance is preferably such that the pressure drop over the coffee pad is between 0.15-1.5 bar, preferably 0.18-1.0 bar, and even more preferably between 0.2-0.9 bar. Brewing using a standard Senseo machine occurs over a predetermined period of time, and during use an aqueous fluid is supplied at a predetermined pressure within this predetermined period of time. The predetermined pressure thereby follows a predetermined pressure over time path, during the predetermined period of time. The fluid is supplied at an absolute pressure within a range of 1.5-2.2 bar, preferably 1.8-2.0 bar. Suitable filter papers are those which provide, in pads without coffee, a pressure drop between 0.06-0.50 bar, preferably, 0.08-0.30 bar and even more preferably 0.1-0.2 bar. As further seen in Figure 5, an apparent interaction between coffee and filter occurs most noticeably when the pressure drop of the individual filter (independent of any interaction or coffee) surpasses a predefined pressure drop at around 0.10 bar. From Figure 5 it can further be seen that the pressure drop over the "X" indicates pads strongly exceed the sum of what can be expected considering the combined pressure drops over the filter and the coffee bed. The pressure drop that can be attributed to the coffee bed alone can be seen at W113 where a pressure drop of approximately 0.08 bar was measured using a filter with a negligible fluid flow resistance. The coffee bed in each experiment was the same. Namely that used in test 1 of Figure 1. A dark grey bar (right hand bar) in Figure 5 indicates a total pressure drop over the pad, while a light gray bar (left hand bar) indicates only a pressure drop over the filter in absence of coffee. It was found in the case of the "X" indicated pads that the total pressure drop changed significantly, while in essence keeping a low pressure drop in the filter and coffee bed itself. It was found that only in specific cases of "X" indicated pads a further pressure drop occurred which extended beyond the accumulated pressure drop of filter and coffee bed alone, the magnitude of the further pressure drop is indicated with arrows for the "X" indicated pads and corresponds to a further fluid flow resistance other than that of the filter or coffee bed. Filters of "X" further showed little to no sedimentation. The increase in total pressure drop further coincides with a reduction in oil concentration in the brew. Therewith the additional pressure drop was determined to arise somewhere at the exit of the pad. The filters of "X" were found to yield an additional fluid flow resistance, which presents itself only during extraction, and which is as dependent on the water permeability of the filter. The effect for "X" filters can be seen from Figure 4 to occur at a Herzberg water permeability somewhere above 325 seconds per 100 ml per 10cm². The water permeability for sheets and filters was measured using the Herzberg water permeability test. The test determines the filtering speed of filter paper. For the test 10cm² of filter area is exposed to a consistent pressure head of 50mm Hg of water at 20 degrees Celsius. It is determined at what time in seconds a 100ml volume of water has penetrated the sample. Note that where in this specification it only states s/100ml, it will be appreciated that this is a simplified notation that likewise to the example of Figure 4 is meant to indicate seconds per 100ml volume of distilled water at a standardized temperature of 20°C per 10 cm² filter and/or sheet surface, and at a pressure head of 50mm Hg.

The method of preparing a beverage with a pad according to the invention would comprise placing the pad in a holder that is equipped with at least one beverage exit opening; closing the holder containing the pad with a lid that has at least one fluid opening; and supplying a fluid under pressure to the at least one fluid opening such that the fluid via the upstream sheet is fed to the beverage preparation product in the pad for preparing the beverage. The beverage leaves the pad via the downstream sheet to an exit opening in the holder.

It is to be noted that oil reduction is explicitly not caused by absorption thereof by the filter paper. In this example the slowing down of the fluid flow and prevention of bypass is responsible for the reduction of oil extraction. This effect differs from papers absorbing oil, such as disclosed in EP 0411546 B1. Such oil absorbing filter papers do not prevent any internal bypass in the coffee bed.

The preferred ground coffee has a grind size of 100-1000µm, and more preferably 150- 450. The grind size distribution has a double-log normal distribution and the average grind size, and part of the 'fine particles <100 µm can vary, depending on the required brew properties. Also current grind sizes in a rage of 350-450µm can be used, and will also give less brew and as a result higher dry matter (DMA) with low oil levels. Alternatively the grind size distribution with can have a median value of 150-250µm, preferably 190-2 10µm, wherein the grind size distribution is preferably substantially double-log normal and/or has a standard deviation of approximately 10-50µm.

With the invention as described above it is possible to create a restriction with environmentally sustainable paper material, which creates a fluid flow restriction with the aid of filter restriction in the paper, and additionally increased restriction partly obtained by interaction of the paper material and the coffee particles. Without wishing to be bound by theory it is believed that due to the high restriction in the filter paper the homogeneous flow through the coffee bed results possibly in combination with a boundary layer of fluid suspended coffee particles. Most notably no evidence was found of coffee particles building up on the filter surface, as would occur with "cake formation" which is the gradual clogging of a filter by surface build up.

As a result of the significantly increased fluid flow resistance by using a time controlled Senseo machine a coffee brew with less volume can be obtained. Such a brew is higher on dry solids, partly because less water is brewed. The brew in part may also be more concentrated due to better extraction caused by less bypass. The more homogeneous flow through the coffee bed caused by the high restriction also results in low oil extraction. The present solution of creating high fluid flow resistance downstream of the coffee bed by using special paper filter material is also cost friendly, and environmentally more sustainable than using adaptors associated with either the pad or the pad holder of the machine to achieve a similar effect. A further benefit of the flow resistance residing in the filter is more homogeneous over the surface of the coffee bed, so that internal bypass is reduced more effectively. Additional resistance caused by the second filter also helps to prevent external bypass as the extra pressure on pad, pushes the pad against holder and intensifies the contact between the pad and holder.

Accordingly there is disclosed a pad and a method for its use in a beverage preparing device, in which the pad comprises a covering that defines an interior space. The interior space contains a bed of roasted and ground coffee particles, while the covering comprises an at least partly porous first sheet of flexible material having a first perimeter edge, and an at least partly porous second sheet of flexible material having a second perimeter edge. The first and second perimeter edges are connected to one another to define the interior space of the covering. The bed of coffee particles has an average first fluid flow resistance. In use one of the at least partly porous first and second sheets is downstream of a side of the bed of coffee particles that is arranged to receive an aqueous fluid. The downstream side first or second sheet has a second fluid flow resistance that exceeds the first flow resistance.

It is thus believed that the operation and construction of the present invention will be apparent from the foregoing description and drawings appended thereto. For the purpose of clarity and a concise description features are described herein as part of the same or separate embodiments, however, it will be appreciated that the scope of the invention may include embodiments having combinations of all or some of the features described. It will be clear to the skilled person that the invention is not limited to any embodiment herein described and that modifications are possible which may be considered within the scope of the appended claims. Also kinematic inversions are considered inherently disclosed and can be within the scope of the invention. In the claims, any reference signs shall not be construed as limiting the claim. The terms 'comprising' and 'including' when used in this description or the appended claims should not be construed in an exclusive or exhaustive sense but rather in an inclusive sense. Thus expression as 'including' or 'comprising' as used herein does not exclude the presence of other elements, additional structure or additional acts or steps in addition to those listed. Furthermore, the words 'a' and 'an' are not to be construed as limited to 'only one', but instead are used to mean 'at least one', and do not exclude a plurality. Features that are not specifically or explicitly described or claimed may additionally be included in the structure of the invention without departing from its scope. Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. To the extend that structure, material, or acts are considered to be essential they are inexpressively indicated as such. Additions, deletions, and modifications within the purview of the skilled person may generally be made without departing from the scope of the invention, as determined by the claims.

## Claims

1. Pad for use in a beverage preparing device comprising:
an at least partly porous first sheet of flexible material;
an at least partly porous second sheet of flexible material; and
a bed of coffee particles provided between the first and second sheet,
wherein the first sheet forms an inlet sheet at a water receiving side of the pad, wherein the second sheet forms an exit filter at an outlet side of the pad,
wherein the bed of coffee particles has a first fluid flow resistance,
wherein the exit filter has a second fluid flow resistance that exceeds the first fluid flow resistance, and wherein the exit filter is selected to possess a Herzberg water permeability of 300 - 3500 seconds per 100 ml per 10 cm2 at a pressure head of 50 mm Hg for generating a third fluid flow resistance, in the presence of coffee particles, which exceeds the first fluid flow resistance,
wherein the third fluid flow resistance is larger than the sum of the first and second fluid flow resistances,
wherein the pad comprises an at least partly porous third sheet of flexible material, wherein the inlet sheet and the third sheet are connected to one another to form connected sheets defining an interior space in which the bed of coffee particles and the exit filter are enclosed, and
wherein the connected sheets each comprise a perimeter edge, and wherein the perimeter edges are sealed to one another.

2. Pad according to claim 1, wherein the connected sheets have mutually different diameters.

3. Pad according to any of the preceding claims, wherein the exit filter has a Herzberg water permeability of 375 - 2800 seconds per 100 ml per 10cm2.

4. Pad according to any of the preceding claims, wherein the exit filter has an average pore size of 0.1 - 10 µm, preferably 0.1 - 6µm.

5. Pad according to any of the preceding claims, wherein the bed of roasted and ground coffee particles has a grind size with an average value of 150 - 600 µm.

6. Pad according to any of the preceding claims, wherein the bed of roasted and ground coffee particles is provided having a particle size distribution in which 5 - 40 mass% of the roasted and ground coffee is 1 - 100 µm and smaller.

7. Pad according to any of the preceding claims, wherein the second and third fluid flow resistance combined corresponds to a pressure drop between 0.2 and 1.5 bar, preferably between
0.4 and 0.9 bar.

8. Pad according to any of the preceding claims, wherein at least one of the first sheet and the second sheet is made of a non-woven filter material, preferably the non-woven filter material
is filtering paper.

9. Pad according to any of the preceding claims, wherein at least one of the first sheet and the second sheet is made up for at least 70% of cellulose, preferably
at least 80% of cellulose, more preferably at least 90% of cellulose.

10. Pad according to claim 9, wherein the non-woven filter material is one of cellulose and cotton linters, and contains ash.

11. Pad according to any of the preceding claims, wherein the first or second sheet has a density of 400 - 1000 kg per m3.

12. Pad according to claim 11, wherein the first or second sheet has a density of 525 - 850 kg per m3.

13. Method of preparing a beverage comprising the steps of
- providing a pad in accordance with one of claims 1 to 12;
- providing a beverage preparing device having a time controlled supply of pressurized hot water and a holder for holding the pad;
- inserting the pad into the holder of the beverage preparing device;
- activating the supply of pressurized hot water;
- allowing brewed coffee to be expelled from the pad; and
- collecting the brewed coffee for consumption.

14. System for preparing a beverage comprising:
- a pad according to any of claims 1 to 12; and
- a beverage preparing device arranged for a time controlled supply of pressurized hot water to the pad, wherein the beverage preparing device comprises a holder for holding the pad.

## Patentansprüche

1. Pad zur Verwendung in einer Getränkezubereitungsvorrichtung, umfassend: eine zumindest teilweise poröse erste Lage aus flexiblem Material; eine zumindest teilweise poröse zweite Lage aus flexiblem Material; und ein Bett aus Kaffeeteilchen, das zwischen der ersten und der zweiten Lage vorgesehen ist,
wobei die erste Lage eine Einlasslage an einer Wasseraufnahmeseite des Pads bildet, wobei die zweite Lage einen Austrittsfilter an einer Auslassseite des Pads bildet,
wobei das Bett aus Kaffeeteilchen einen ersten
Fluidströmungswiderstand aufweist,
wobei der Austrittsfilter einen zweiten Fluidströmungswiderstand aufweist, der den ersten Fluidströmungswiderstand übersteigt, und wobei der Austrittsfilter so ausgewählt ist, dass er eine Herzberg-Wasserdurchlässigkeit von 300 - 3500 Sekunden pro 100 ml pro 10 cm² bei einer Druckhöhe von 50 mm Hg aufweist, um einen dritten Fluidströmungswiderstand in Gegenwart von Kaffeeteilchen zu erzeugen, der den ersten Fluidströmungswiderstand übersteigt,
wobei der dritte Fluidströmungswiderstand größer als die Summe des ersten und des zweiten Fluidströmungswiderstands ist,
wobei das Pad eine zumindest teilweise poröse dritte Lage aus flexiblem Material umfasst, wobei die Einlasslage und die dritte Lage miteinander verbunden sind, um verbundene Lagen zu bilden, die einen Innenraum definieren, in dem das Bett aus Kaffeeteilchen und der Austrittsfilter eingeschlossen sind, und
wobei die verbundenen Lagen jeweils einen Umfangsrand umfassen und wobei die Umfangsränder miteinander versiegelt sind.

2. Pad nach Anspruch 1, wobei die verbundenen Lagen voneinander verschiedene Durchmesser haben.

3. Pad nach einem der vorhergehenden Ansprüche, wobei der Austrittsfilter eine Herzberg-Wasserdurchlässigkeit von 375 - 2800 Sekunden pro 100 ml pro 10 cm² aufweist.

4. Pad nach einem der vorhergehenden Ansprüche, wobei der Austrittsfilter eine durchschnittliche Porengröße von 0,1 - 10 µm, vorzugsweise 0,1 - 6 µm aufweist.

5. Pad nach einem der vorhergehenden Ansprüche, wobei das Bett aus gerösteten und gemahlenen Kaffeeteilchen eine Mahlgröße mit einem Durchschnittswert von 150 - 600 µm aufweist.

6. Pad nach einem der vorhergehenden Ansprüche, wobei das Bett aus gerösteten und gemahlenen Kaffeeteilchen eine Teilchengrößenverteilung aufweist, bei der 5 - 40 Massenprozent des gerösteten und gemahlenen Kaffees 1 - 100 µm und kleiner sind.

7. Pad nach einem der vorhergehenden Ansprüche, wobei der zweite und dritte Fluidströmungswiderstand zusammen einem Druckabfall zwischen 0,2 und 1,5 bar, vorzugsweise zwischen 0,4 und 0,9 bar, entsprechen.

8. Pad nach einem der vorhergehenden Ansprüche, wobei mindestens eine der ersten Lage und der zweiten Lage aus einem Vliesfiltermaterial hergestellt ist, wobei das Vliesfiltermaterial vorzugsweise Filterpapier ist.

9. Pad nach einem der vorhergehenden Ansprüche, wobei mindestens eine der ersten Lage und der zweiten Lage aus mindestens 70 % Cellulose, vorzugsweise mindestens 80 % Cellulose, weiter bevorzugt mindestens 90 % Cellulose besteht.

10. Pad nach Anspruch 9, wobei das Vliesfiltermaterial eines von Cellulose und Baumwoll-Linters ist und Asche enthält.

11. Pad nach einem der vorhergehenden Ansprüche, wobei die erste oder zweite Lage eine Dichte von 400 - 1000 kg pro m³ aufweist.

12. Pad nach Anspruch 11, wobei die erste oder zweite Lage eine Dichte von 525 - 850 kg pro m³ aufweist.

13. Verfahren zum Zubereiten eines Getränks, umfassend die folgenden Schritte
- Bereitstellen eines Pads nach einem der Ansprüche 1 bis 12;
- Bereitstellen einer Getränkezubereitungsvorrichtung mit einer zeitgesteuerten Zufuhr von unter Druck stehendem Heißwasser und einer Halterung zum Halten des Pads;
- Einführen des Pads in die Halterung der Getränkezubereitungsvorrichtung;
- Aktivieren der Zufuhr von unter Druck stehendem Heißwasser;
- Ermöglichen, dass gebrühter Kaffee aus dem Pad ausgestoßen wird; und
- Sammeln des gebrühten Kaffees zum Verzehr.

14. System zum Zubereiten eines Getränks, umfassend:
- ein Pad nach einem der Ansprüche 1 bis 12; und
- eine Getränkezubereitungsvorrichtung, die für eine zeitgesteuerte Zufuhr von unter Druck stehendem Heißwasser zu dem Pad eingerichtet ist, wobei die Getränkezubereitungsvorrichtung eine Halterung zum Halten des Pads umfasst.

## Revendications

1. Dosette destinée à être utilisée dans un dispositif de préparation de boisson comprenant :
une première feuille de matériau flexible au moins partiellement poreuse ;
une deuxième feuille de matériau flexible au moins partiellement poreuse ; et
un lit de particules de café fourni entre les première et deuxième feuilles,
dans laquelle la première feuille forme une feuille d'entrée au niveau d'un côté de réception d'eau de la dosette, dans laquelle la deuxième feuille forme un filtre de sortie au niveau d'un côté de sortie de la dosette,
dans laquelle le lit de particules de café présente une première résistance à l'écoulement de fluide,
dans laquelle le filtre de sortie présente une deuxième résistance à l'écoulement de fluide qui dépasse la première résistance à l'écoulement de fluide, et dans laquelle le filtre de sortie est sélectionné pour posséder une perméabilité à l'eau de Herzberg de 300 à 3500 secondes pour 100 ml pour 10 cm2 à une hauteur de charge de 50 mm Hg pour générer une troisième résistance à l'écoulement de fluide, en présence de particules de café, qui dépasse la première résistance à l'écoulement de fluide,
dans laquelle la troisième résistance à l'écoulement de fluide est supérieure à la somme des première et deuxième résistances à l'écoulement de fluide,
dans laquelle la dosette comprend une troisième feuille de matériau flexible au moins partiellement poreuse, dans laquelle la feuille d'entrée et la troisième feuille sont reliées l'une à l'autre pour former des feuilles reliées définissant un espace intérieur dans lequel le lit de particules de café et le filtre de sortie sont enfermés, et
dans laquelle les feuilles reliées comprennent chacune un bord périmétrique, et dans laquelle les bords périmétriques sont scellés les uns aux autres.

2. Dosette selon la revendication 1, dans laquelle les feuilles reliées présentent des diamètres mutuellement différents.

3. Dosette selon l'une quelconque des revendications précédentes, dans laquelle le filtre de sortie a une perméabilité à l'eau de Herzberg de 375 à 2800 secondes pour 100 ml pour 10 cm2.

4. Dosette selon l'une quelconque des revendications précédentes, dans laquelle le filtre de sortie a une taille de pore moyenne de 0,1 à 10 µm, de préférence de 0,1 à 6 µm.

5. Dosette selon l'une quelconque des revendications précédentes, dans laquelle le lit de particules de café torréfiées et broyées a une taille de broyage d'une valeur moyenne de 150 à 600 µm.

6. Dosette selon l'une quelconque des revendications précédentes, dans laquelle le lit de particules de café torréfiées et broyées présente une distribution granulométrique dans laquelle 5 à 40 % en masse du café torréfié et broyé est de 1 à 100 µm et moins.

7. Dosette selon l'une quelconque des revendications précédentes, dans laquelle les deuxième et troisième résistances à l'écoulement de fluide combinées correspondent à une chute de pression comprise entre 0,2 et 1,5 bar, de préférence entre 0,4 et 0,9 bar.

8. Dosette selon l'une quelconque des revendications précédentes, dans laquelle au moins l'une de la première feuille et de la deuxième feuille est faite d'un matériau filtrant non tissé, le matériau filtrant non tissé étant de préférence du papier filtrant.

9. Dosette selon l'une quelconque des revendications précédentes, dans laquelle au moins l'une de la première feuille et de la deuxième feuille est constituée pour au moins 70 % de cellulose, de préférence au moins 80 % de cellulose, plus préférablement au moins 90 % de cellulose.

10. Dosette selon la revendication 9, dans laquelle le matériau filtrant non tissé est l'un de linters de cellulose et de coton et contient de la cendre.

11. Dosette selon l'une quelconque des revendications précédentes, dans laquelle la première ou la deuxième feuille a une densité de 400 à 1000 kg par m3.

12. Dosette selon la revendication 11, dans laquelle la première ou la deuxième feuille a une densité de 525 à 850 kg par m3.

13. Procédé de préparation d'une boisson, comprenant les étapes consistant à :
- fournir une dosette selon l'une des revendications 1 à 12 ;
- fournir un dispositif de préparation de boisson ayant une alimentation commandée dans le temps en eau chaude sous pression et un support pour maintenir la dosette ;
- insérer la dosette dans le support du dispositif de préparation de boisson ;
- activer l'alimentation en eau chaude sous pression ;
- laisser le café infusé être expulsé de la dosette ; et
- recueillir le café infusé pour la consommation.

14. Système de préparation d'une boisson, comprenant :
- une dosette selon l'une quelconque des revendications 1 à 12 ; et
- un dispositif de préparation de boisson agencé pour une alimentation commandée dans le temps de la dosette en eau chaude sous pression, dans lequel le dispositif de préparation de boisson comprend un support pour maintenir la dosette.
